# EUROPEAN PATENT SPECIFICATION

(11) **EP 0 514 733 B1**
(45) Date of publication and mention of the grant of the patent: **22.01.1997**
(21) Application number: 92107881.2
(22) Date of filing: 11.05.1992
(51) Int. Cl.: G11B 7/00, G11B 7/24

(54) **Optical recording medium**
Optisches Aufzeichnungsmedium
Milieu d'enregistrement optique

(30) Priority: 10.05.1991 JP 133326/91
(43) Date of publication of application: 25.11.1992
(73) Proprietor: YKK CORPORATION, Chiyoda-ku, Tokyo (JP)
(72) Inventor: Takeda, Hideki, Kawasaki-shi, Kanagawa (JP); Osawa, Fumiko, Toyama-shi, Toyama (JP)
(74) Representative: Patentanwälte Leinweber & Zimmermann

(56) References cited:
- EP-A- 0 362 852
- PATENT ABSTRACTS OF JAPAN vol. 15, no. 167 (C-827)24 April 1991 & JP-A-3 036 243
- PATENT ABSTRACTS OF JAPAN vol. 11, no. 189 (P-587)18 June 1987 & JP-A-62 014 349
- PATENT ABSTRACTS OF JAPAN vol. 13, no. 586 (P-982)25 December 1989 & JP-A-1 248 330

## Description

### BACKGROUND OF THE INVENTION

### 1. Field of the Invention

The present invention relates to an optical information recording medium capable of recording, reproducing and erasing.

### 2. Description of the Prior Art

There have heretofore been used as the optical information medium, a read-only type one which can only read out recorded information, a direct-read-after-write type one which forms bits on a recording film by laser beam radiation to permanently record information, and an erasable type one which can arbitrarily record, reproduce and erase information, each exhibiting the characteristics of its own, respectively.

As the erasable type medium, there have been known a photomagnetic type which takes advantage of photomagnetic effect and a phase transition type which performs recording and erasing by taking advantage of the transition between a crystalline phase and an amorphous phase.

Various materials have been proposed as the recording material of the phase transition type but none of them has fully fulfilled the requirements for this type of recording material.

For example, Te and Te-based material suffer from the defects that they are low-melting point materials, have a low crystallization temperature, a small difference between the crystallization temperature and the melting point and a poor resistance to even slight amounts of moisture causing deterioration of the surface thereof. On the other hand, Au-Si-based and AuAl₂-based materials are hard to transfer into the amorphous phase, and Pd-Si-based materials have a relatively high melting point and involve a fear of increasing damage to the substrate. In addition, the above-mentioned compounds suffer the drawback of being expensive in practical application since Te, Au and Pd are all rare metals.

Moreover, Te and Te-based materials are defective in that they are apt to spatter the material in the step of writing information owing to the higher vapor pressure, thus making themselves nonendurable to repeated use.

Further, EP 0 362 852 A3 discloses the use of a thin film having a composition being represented by the general formula:

SnₓSb_{y}Te_{z}Se_{α}A_{β} B_{γ}C_{δ}

wherein x, y, z, α, β, γ and δ are in the ranges of 3 ≤ x ≤ 50, 10 ≤ y ≤ 70, 10 ≤ z + α ≤ 87, 0.1 ≤ z/α ≤ 10, 0 ≤ β ≤ 20, 0 ≤ γ ≤ 30 in atomic percentage, A is at least one element of Tl, hologen atoms and alkali metals, B is at least one element of Au, Ag, Cu, Pd, Ta, W, Ir, Sc, Y, Ti, Zr, V, Nb, Cr, Mo, Mn, Fe, Ru, Co, Rh and Ni, and C is at least one of other elements than Sn, Sb, Te, Se and those represented by A and B, or by the following general formula:

SbₓTe_{y}A'_{z}B'_{α}C'_{β}D_{γ}

wherein x, y, z, α, β, and γ are in the ranges of 5 ≤ x ≤ 70, 10 ≤ y ≤ 85, 3 ≤ z ≤ 30, 0 ≤ α ≤ 20, 0 ≤ β ≤ 30, 0 ≤ γ ≤ 10, A' is at least one element of Sn, Bi, Pb, Ga, Au and I, and B' is at least one element of Tl, hologen atoms and alkali metals, C' is at least one element of Ag, Cu, Pd, Ta, W, Ir, Sc, Y, Ti, Zr, V, Nb, Cr, Mo, Mn, Fe, Ru, Co, Rh and Ni, and D is at least one of the other elements than Sb, Te and those represented by A', B', and C' as a material for a recording layer of an optical recording medium, allowing recording and erasing of information by effecting a transition between an amorphous and a crystalline phase.

### SUMMARY OF THE INVENTION

An object of the present invention is to solve the above problems of the prior art and at the same time provide an optical recording medium which has a sufficient difference between the crystallization temperature and the melting point and excellent characteristics in writing and erasing.

As a result of intensive research and investigation made by the present inventors, it has been found that a specified alloy comprising Al is useful as an optical recording material of the phase transition type. The present invention relates to the use of an alloy capable of recording and erasing through transition between an amorphous phase and a crystalline phase by laser beam heating, the recording material having a composition represented by the general formula:

LnₐX_{b}Al_{(100-(a+b))}

wherein Ln is either at least one metallic element selected from the group consisting of Y, La, Ce, Nd, Sm and Gd or Mm (misch metal); Mm consisting of 40 - 50% Ce, 20 - 25% La, and the balance being other rare earth elements; X is at least one metallic element selected from the group consisting of Fe, Co, Ni and Cu; and a and b are, in atomic percentage,
40 ≤ a ≤ 80 and 5 ≤ b ≤ 40
as a material for a recording layer in an optical recording medium, said recording layer being capable of recording and erasing through a transition between an amorphous phase and a crystalline phase by laser beam heating.

### DETAILED DESCRIPTION OF THE PREFERRED EMBODIMENTS

As disclosed in Japanese Patent Laid-Open No. 36243/1991, corresponding to EP-A-0406770 and relating to the use of amorphous alloy materials as materials exhibiting a high mechanical strength, corrosion resistance and workability, the Ln-X-Al alloy has an extremely high capability to form am amorphous phase and a crystallization temperature of at least 523 K that is much higher than room temperature, and, therefore, has a very high stability of the amorphous phase at around room temperature. In addition, different from Te-based compounds, the Ln-X-Al alloy has no possibility at all of spattering the material because of low vapor pressure at around the melting point, which is 1000 K or lower, and minimizes the possibility that heating in the step of writing might affect a substrate. Each of the elements constituting the foregoing alloy has a Clarke number much higher than those of Pd, Au and Te, thus making it practical to a great extent. As described hereinbefore, the use of an alloy material according to the present invention allows writing and erasing with ease and stability and enables the supply of an optical disc at a low cost.

The reason for limiting the composition to 40 ≤ a ≤ 80 atomic % and 5 ≤ b ≤ 40 atomic % in the general formula LnₐX_{b}Al_{(100-(a+b))} is that a composition outside the above range makes the amorphization difficult and extremely elevates the melting point. The compositional range of a is preferably 50 ≤ a ≤ 80 atomic %. In the case of Mm being used as the Ln element, more inexpensiveness can be achieved than the case where another Ln element is used.

Examples of particularly desirable alloys as the recording material include La₅₅Ni₂₅Al₂₀, Sm₆₀Co₂₅Al₁₅, Gd₅₀Fe₁₀Al₄₀ and Mm₅₅Cu₁₀Al₃₅.

In the use according to the present invention, importance is attached to the use of the aforestated specified alloy material as the material constituting the recording layer, and there is no limitation to the other parts of the optical recording medium such as substrate and protective layer, thereby making any type thereof usable.

Now, the present invention will be described with reference to the examples, which however exemplify the specific embodiments of the present invention and by no means limit the present invention thereto.

### Example 1

A film of about 100 nm thickness was formed by the sputtering method using La₅₅Ni₂₅Al₂₀ as the target. It was confirmed with a transmission electron microscope that the above alloy was amorphous and had a crystallization temperature of 542 K. The film was irradiated with laser beams having a power density of 5 mW/µm² for 1 µsec. As a result, the amorphous phase changed to a crystalline phase causing a decrease in the reflectivity by about 13%. Then, the film was irradiated in the same region as above with laser beams having a power density of 10 mW/µm² for 50 nsec and cooled. As a result, the phase changed to amorphous phase and the reflectivity returned to the original value. The aforesaid phenomena can be caused repeatedly. An optical disk comprising La₅₅Ni₂₅Al₂₀ alloy with a melting point of 850 K which was formed by its use on a PMMA (polymethyl methacrylate) substrate was capable of recording and erasing.

### Example 2

The same result as in the Example 1 was obtained with the optical disk comprising Sm₆₀Co₂₅Al₁₅ alloy having a crystallization temperature of 560 K and a melting point of 870 K which was prepared by the sputtering method using the same alloy as the target and a PMMA substrate.

### Example 3

The same result as in the Example 1 was obtained with the optical disk comprising Gd₅₀Fe₁₀Al₄₀ alloy having a crystallization temperature of 610 K and a melting point of 940 K which was prepared by the sputtering method using the same alloy as the target and a PMMA substrate.

The above-mentioned alloys described in the case of being applied to the optical disks in the present invention are applicable to any of the recording media which perform recording and erasing taking advantage of the phase transition between an amorphous phase and a crystalline phase by laser beam heating and are not necessarily restricted to the medium in the form of disk as a whole.

As described hereinbefore, the use of a recording material according to the present invention does not damage the substrate because the material has a melting point not higher than 1000 K, is thermally stable by virtue of a high crystallization temperature of 500 K or above and is capable of writing and erasing information with ease and stability owing to the sufficient difference between the crystallization temperature of about 500 K or higher and the melting point of about 800 K or higher.

## Claims

1. Use of an alloy having a composition represented by the general formula
LnₐX_{b}Al_{(100-(a+b))}
wherein Ln is either at least one metallic element selected from the group consisting of Y, La, Ce, Nd, Sm and Gd or Mm (misch metal); X is at least one metallic element selected from the group consisting of Fe, Co, Ni and Cu; and a and b are, in atomic percentage,
40 ≤ a ≤ 80 and 5 ≤ b ≤ 40
for a recording layer in an optical recording medium, said recording layer being capable of recording and erasing through transition between an amorphous phase and a crystalline phase by laser beam heating.

## Patentansprüche

1. Verwendung einer Legierung mit einer durch die folgende allgemeine Formel dargestellten Zusammensetzung:
LnₐX_{b}Al_{(100-(a+b))},
wobei Ln mindestens ein aus der aus Y, La, Ce, Nd, Sm und Gd bestehenden Gruppe ausgewähltes Metallelement oder Mm (Mischmetall) ist, X mindestens ein aus der aus Fe, Co, Ni und Cu bestehenden Gruppe ausgewähltes Metallelement ist und a sowie b Angaben in at% sind, für die gilt:
40 ≤ a ≤ 80 und 5 ≤ b ≤ 40
als Aufzeichnungsschicht in einem optischen Aufzeichnungsmedium, wobei mit der Aufzeichnungsschicht durch einen Übergang zwischen einer amorphen Phase und einer kristallinen Phase mittels einer Laserstrahlerwärmung ein Aufzeichnen und Löschen bewirkt werden kann.

## Revendications

1. Utilisation d'un alliage ayant une composition représentée par la formule générale :
LnₐX_{b}Al_{(100-(a+b))}
dans laquelle :
Ln représente soit au moins un élément métallique choisi dans le groupe constitué de Y, La, Ce, Nd, Sm et Gd, soit Mm (mischmétal),
X représente au moins un élément métallique choisi dans le groupe constitué de Fe, Co, Ni et Cu, et
a et b représentent des pourcentages atomiques tels que :
40 ≤ a ≤ 80 et 5 ≤ b ≤ 40 ,
dans une couche d'enregistrement d'un support d'enregistrement optique, ladite couche d'enregistrement étant capable d'enregistrement et d'effacement par passage d'une phase amorphe à une phase cristalline et inversement, par chauffage par un rayon laser.
